# EUROPEAN PATENT APPLICATION

(11) **EP 0 596 147 A1**
(43) Date of publication of application: **11.05.1994**
(21) Application number: 92118758.9
(22) Date of filing: 02.11.1992
(51) Int. Cl.: F16L 11/08

(54) **Braid-reinforced flexible hose and apparatus for manufacturing the same**

(71) Applicant: Nakamura, Kenjiro, Tokyo (JP)
(72) Inventor: Nakamura, Kenjiro, Tokyo (JP)
(74) Representative: Weber, Joachim, Dr.

(57) **Abstract**

A braid-reinforced flexible hose has a three-layered structure consisting of a flexible tube layer (12) made of rubber or a synthetic resin, a braid layer (13) covering the periphery of the tube layer (12) and consisting of threads (13a), and a flexible cover layer (14) covering the braid layer (13) and made of rubber or a synthetic resin. Further, a plurality of linear metallic wires (15) provided between the tube layer (12) and braid layer (13) such that they extend in a direction of the axis of the tube layer (12). These metallic wires act against the elastic restoring forces of the tube layer (12), braid layer (13), and cover layer (14) when the hose is bent, thereby keeping the shape of the bent hose.

## Description

This invention relates to a braid-reinforced flexible hose for transferring a gas or a liquid, and an apparatus for manufacturing the hose.

A hydraulic hose for a machine tool generally transfers a highly-pressurized fluid, and hence must have a high pressure resistance and a high flexibility. To this end, a braid-reinforced flexible hose or a cloth-wound type hose are used as the hydraulic hose.

The braid-reinforced flexible hose has a three- layer structure comprising a tube layer (inner layer) made of rubber or a synthetic resin, a tubular braid layer (reinforcing layer) formed by braiding plant fiber or metallic fiber on the outer periphery of the tube layer by the use of a braider, and a tubular cover layer (outer layer) made of rubber or a synthetic resin.

On the other hand, the cloth-wound type hose has a reinforcing layer comprising a plurality of cloth layer elements laminated on one another. Metallic fiber is employed in this hose, too. The metallic fiber in each hose reinforces the hoses so as not to be broken due to high pressure, and is located spirally or at an angle to the axis of the hose.

Accordingly, though the hoses are flexible and can be bent in a desired direction, they cannot be kept bent when a bending force is released, since the hose is made of rubber or other elastic materials. However, if necessary, the hose can be kept bent to have a desired shape, by the following methods:
(a) A method of setting a hose in a hose set unit made of a metal or a wood and having a desired shape, or alternatively inserting a core member, which was beforehand treated to have a desired shape, into a hose, then subjecting the hose to heat treatment.
(b) A method of inserting a metallic spiral tube into a hose at the time of forming the hose, then bending the hose into a desired shape, thereby keeping the shape by the shape-keeping force of the metallic spiral tube.
(c) A method of interposing a linear metallic wire between a braid layer and a cover layer of a hose in the axial direction thereof, then bending the hose into a desired shape, and keeping the shape by the plastic deformation of the metallic wire.

These methods, however, have disadvantages as below.

In the method (a), it is necessary to employ a particular metallic frame or core member for each hose, and also an equipment for performing heat treatment. Further, heat treatment inevitably reduces the quality of the hose.

In the method (b), insertion of a metallic spiral tube into a hose increases the weight and cost of the hose, and makes it difficult to attach a mouth ring to an end of the hose.

In the method (c), it is difficult to insert a linear metallic wire between the braid layer and cover layer. Further, the metallic wire may be displaced in a circumferential direction when the hose is bent. A projected stripe may occur on the outer periphery of the cover layer, which makes it difficult to attach a mouth ring to an end of the hose.

It is an object of the invention to provide a braid-reinforced flexible hose which can be kept bent to have a desired shape without changing the properties of the hose.

Since in the invention, wire members are linearly provided in a braid layer in a direction of the axis of the hose, they act against the elastic restoring forces of the tube layer, braid layer, and cover layer when the hose is bent, thereby keeping the shape of the bent hose without changing the properties thereof. Therefore, it is applicable to a hydraulic hose for use in a machine tool.

It is another object of the invention to provide an apparatus for manufacturing a braid-reinforced flexible hose, which can provide wire members for keeping the shape of the hose when it is bent, automatically and at the same time as threads being braided.

Since in the apparatus of the invention, wire members are braided with threads, they act against the elastic restoring forces of the tube layer, braid layer, and cover layer when the hose is bent, thereby keeping the shape of the bent hose. Further, braiding wire members with thread enables the wire members to be provided in a direction of the axis of the hose without being circumferentially displaced.

This invention can be more fully understood from the following detailed description when taken in conjunction with the accompanying drawings, in which:
Fig. 1 is a side view, showing a braid-reinforced flexible hose according to a first embodiment of the invention;
Fig. 2 is a longitudinal sectional view, showing part of the hose of Fig. 1;
Fig. 3 is a transverse sectional view, showing the hose of Fig. 1;
Fig. 4 is a perspective view, showing a state in which the hose of Fig. 1 is bent;
Fig. 5 is a side view of a hose according to a second embodiment, showing a state in which it is not bent;
Fig. 6 is a side view, showing a state in which the hose of Fig. 5 is bent;
Fig. 7 is a fragmentary longitudinal sectional view, showing a state in which a caulking metallic member is mounted on an end of the hose of Fiq. 5;
Fig. 8 is an enlarged sectional view, showing a portion a of Fig. 7;
Fig. 9 is a side view of the hose of Fig. 5, showing a state in which it is bent;
Fig. 10 is a schematic front view, showing a braider according to a third embodiment of the invention;
Fig. 11 is a schematic side view of the braider of Fig. 10;
Fig. 12 is a longitudinal sectional view, showing a carrier mechanism employed in the braider of Fig. 10;
Fig. 13 is a longitudinal sectional view, showing a metallic wire-forwarding unit employed in the carrier mechanism of Fig. 12;
Fig. 14 is a fragmentary sectional view, showing a carrier in the carrier mechanism of Fig. 12; and
Fig. 15 is a bottom plan view of the carrier of Fig. 14.

The invention will be explained with reference to the accompanying drawings showing embodiments thereof.

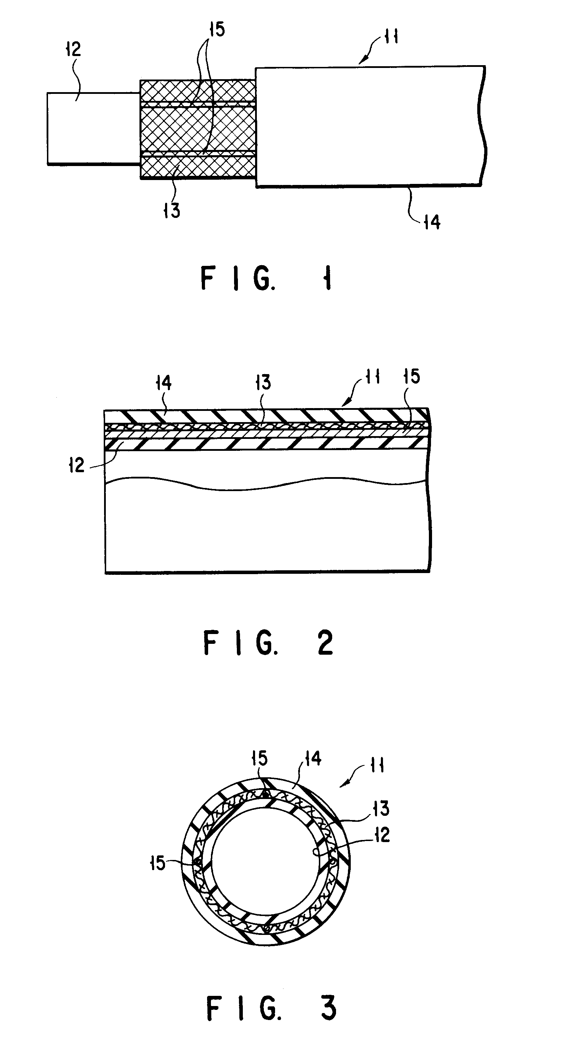

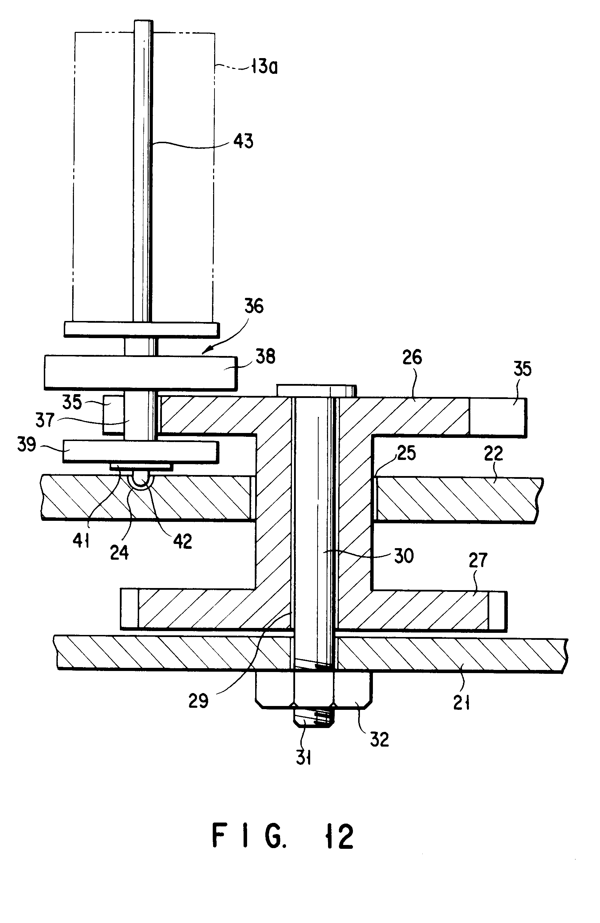

Figs. 1 - 4 show a first embodiment of the invention. As is shown in the figures, the main body 11 of a braid-reinforced flexible hose consists of a flexible elongated tube layer 12 made of rubber or a synthetic resin, a tubular braid layer 13 formed by braiding threads 13a (see Fig. 11), made of plant fiber or metallic fiber, on the outer periphery of the tube layer 12 by means of a braider, and a flexible tubular cover layer 14 made of rubber or a synthetic resin and covering the braid layer 13.

In the braid layer 13, four metallic wires 15, consisting of non-expansible and plastically deformable wire members such as stainless-steel wires, extend linearly in the axial direction of the hose 11, and are arranged circumferentially at regular intervals. These metallic wires 15 are braided with the threads 13a by means of a braider at the time of forming the tubular braid layer 13, and hence are fixed by the threads 13a.

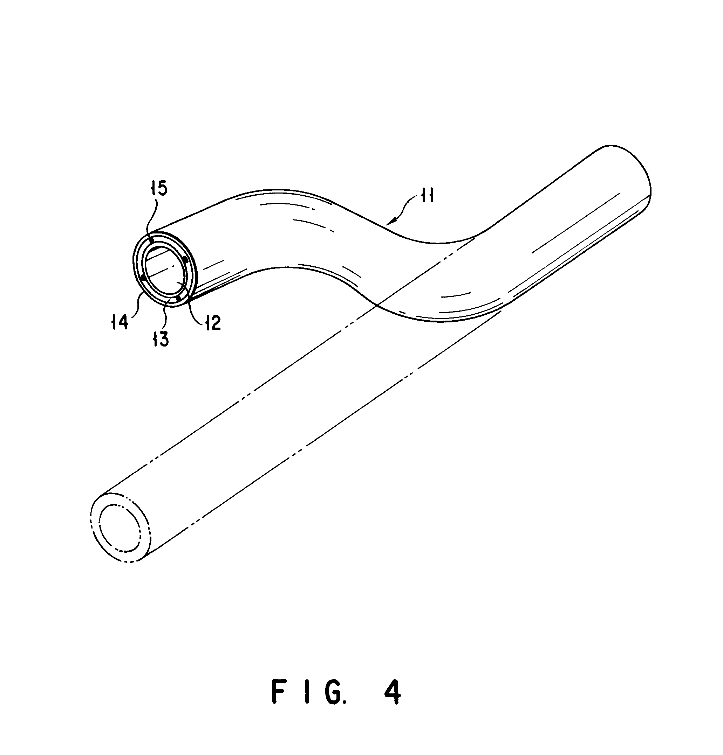

The thus-arranged linear elongated hose main body 11 is cut to have a predetermined length, and is bent into a desired shape in accordance with a place where it is used. Since the main body 11 is flexible, it can be bent easily into a desired shape, as is shown in Fig. 4. Further, since the metallic wires 15 are plastically deformable, the hose main body 11 is prevented from being restored to an original shape, and kept bent.

The metallic wires 15 are braided with the threads 13a at the time of forming the layer 13, so that they are fixed by the threads 13a, and are prevented from being circumferentially displaced. Thus, the metallic wires 15 can be arranged at regular intervals.

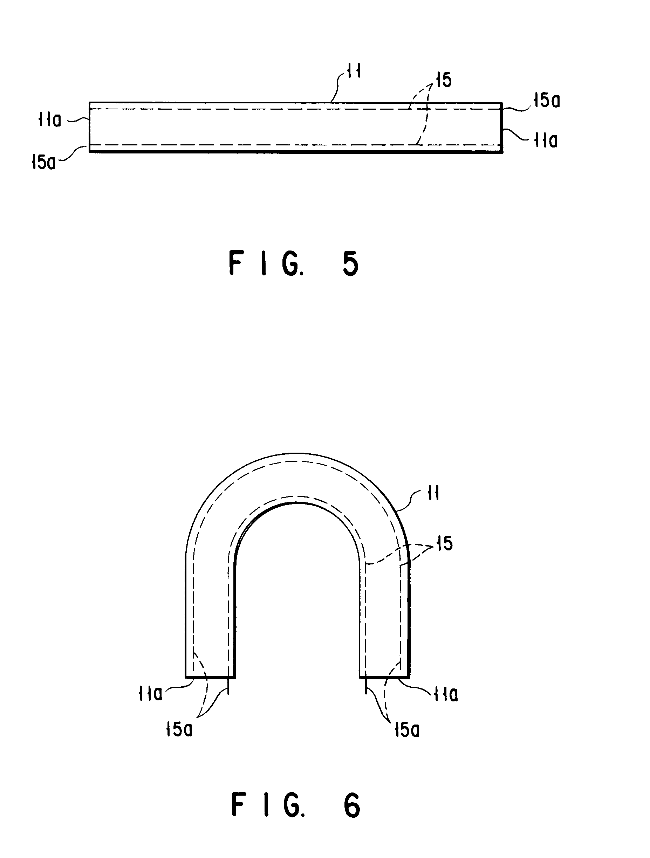

Figs. 5 - 9 show a second embodiment of the invention, in which elements corresponding to those in the first embodiment are designated by corresponding reference numerals, and explanation thereof is omitted. The main body 11 of the braid-reinforced flexible hose is cut into a length which the occasion requires. At this time, as is shown in Fig. 5, the metallic wires 15 extending through the hose main body 11 in the direction of the axis each have both opposite ends 15a thereof located at corresponding end faces 11 a.

When the body 11 is bent as shown in Fig. 6, the both opposite ends 15a of that one of the metallic wires 15 which is located on the inner side of the curve project from the end faces 11 a, whereas the both opposite ends 15a of the other wire which is located on the outer side of the curve retreats from the end faces 11 a.

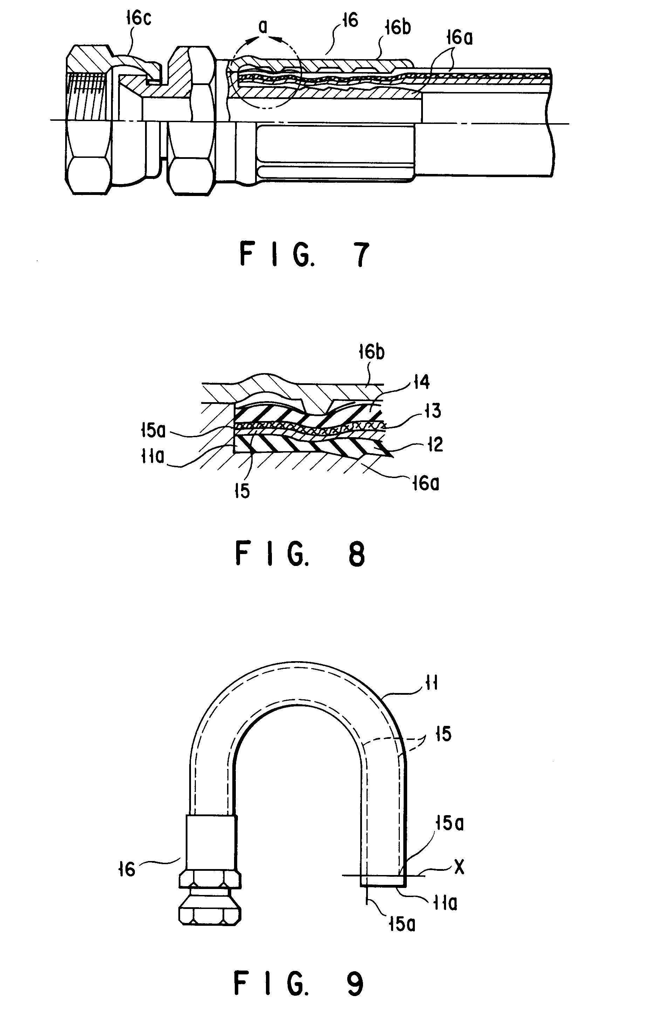

To avoid this, a caulking metallic member 16 is fixed, as shown in Fig. 7, to an end of the hose main body 11 of a predetermined length which is not bent as shown in Fig. 5. Specifically, the caulking member 16 includes a nipple 16a inserted in the main body 11 and having saw teeth, a socket 16b fitted on an outer peripheral portion of the main body 11 and having saw teeth, and a connecting nut 16c. The caulking member 16 caulks an end of the main body 11 with the nipple 16a and socket 16b, thereby fixing the ends 15a of the metallic wires.

Then, as is shown in Fig. 9, when the main body 11 is bent into a desired shape, the end 15a of that one of the metallic wires 15 which is located on the inner side of the curve projects from the end face 11 a of the main body 11, whereas the end 15a of the other wire which is located on the outer side of the curve retreats from the end face 11 a.

Then, an end portion of the main body 11 is cut at a cutting position (line X in Fig. 9), i.e., at the end 15a of the wire 15 which retreats from the end face 11 a of the body 11, and another caulking member is mounted on the cut end to fix it.

Thus, both opposite ends 15a of each metallic wire 15 are fixed by the caulking members 16. The non-expansible metallic wires 15 serves against the elastic restoring force of the inner and outer layers 12 and 14 and braid layer 13 to keep the shape of the body 11 obtained as a result of bending. Though in the above embodiments, the metallic wire is made of a plastically deformable metal, it may consist of a metallic member such as a piano wire which is elastically deformable but not extensible.

Further, although in the above embodiments, four metallic wires are braided with the threads 13a at the time of forming the braid layer 13, the number of the metallic wires is not limited to four, but may be even one if restoration of the hose main body 11 is prevented, and the body 11 is kept bent.

As is described above, the hose main body is bent to a desired shape when used. The smaller the bend radius of the main body, the more easily the main body can be bent and handled. However, if the bend radius is too small, the main body may be deformed or broken, thereby deteriorating its inherent function.

To avoid this, the minimum bend radius of the main body is generally predetermined in accordance with its type, diameter, etc. The minimum bend radius, i.e., a minimum value of the bend radius with which the main body can be used without deteriorating the function thereof, and reduction of its weight are important elements to be considered when the hose is made. Accordingly, it is necessary to determine the diameter of the metallic wires in consideration of these elements.

For example, in the case of a hose with an inner diameter of 12. 7 mm q), which is made by braiding a thread (made of nylon, vinylon, etc.), metallic wires of a diameter of 0.5 mm q) are effective to enhance the weight thereof. If these wires are bent with a bend radius 63.5 mm (the inner diameter of the hose x 5), they will be kinked or considerably deformed. If, however, they have a diameter of 0.8 - 1.0 mm q), they will not be kinked or deformed.

Further, if the diameter of the metallic wires is 1.2 mm q) or more, the entire hose is too heavy, though they are free from such kink or deformation. In summary, since the diameter of the hose, the bend radius, and the diameter of a metallic wire are relevant to one another, the diameter and/or material of the metallic wire must be determined to accord with the end of use.

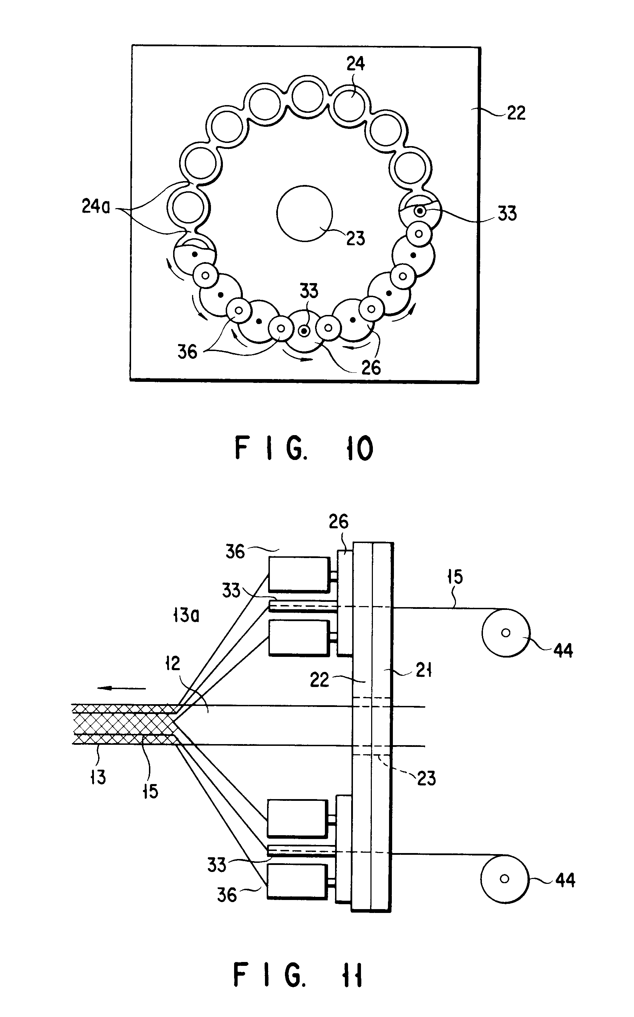

Then, an apparatus for manufacturing the above-described braid-reinforced flexible hose will be explained. Figs. 10 - 15 show a braider. The basic structure of the braider other than its essential part is identical to a conventional one disclosed in Published Examined Japanese Utility Model Application No. 50-32594. Reference numeral 21 denotes a main body located perpendicular to the floor, and reference numeral 22 a table plate provided in front of the main body 21.

As is shown in Figs. 10 and 11, insertion holes 23 for inserting the tube layer 12 therethrough are formed in middle portions of the main body 21 and table plate 22. A plurality of carrier guide grooves 24 shaped like numeral 8 and communicating with one another are provided on the table plate 22 to surround the insertion hole 23 of the plate 22.

As is shown in Fig. 12, a through hole 25 is formed in a middle portion of each carrier guide groove 24, and a spool-shaped cam 26 is rotatably inserted through the hole 25. The cam 26 has a gear portion 27 formed integral with an end of the cam and located between the main body 21 and table plate 22.

A bearing hole 29 is formed through a middle portion of the cam 26, through which a bolt 30 extends. The bolt 30 has an end aligned with the front end of the cam 26, and the other end projecting from the rear end of the same.

The bolt 30 has a screw portion 31 secured to the main body 21 by means of a nut 32 from the outside. Thus, the cam 26 is rotatably supported by the bolt 30. The gear portions 27 of adjacent cams 26 mesh with one another, and the adjacent cams 26 will rotate in opposite directions when one of the gear portions 27 is engaged with a driving gear (not shown).

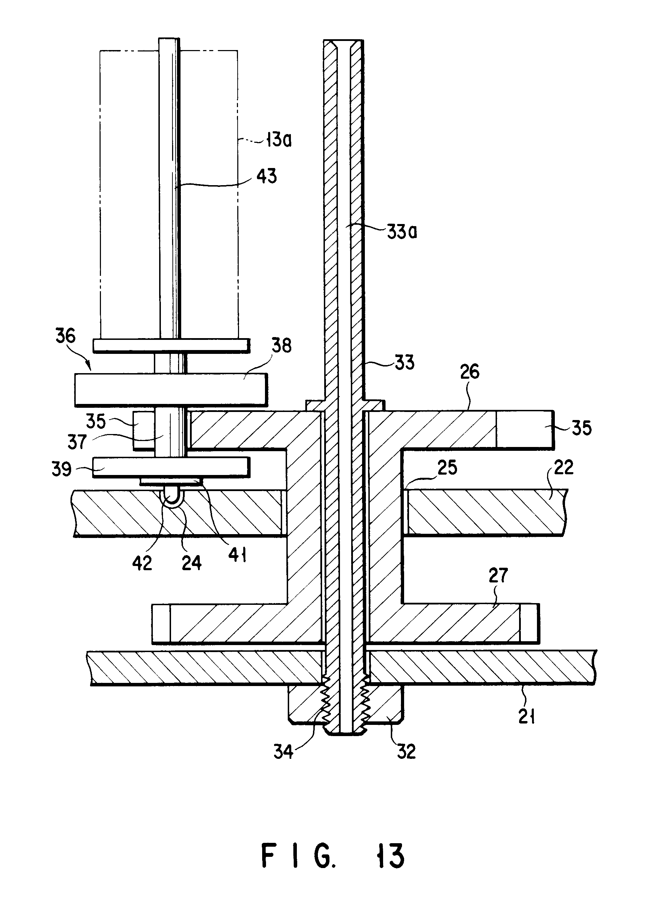

As is shown in Fig. 13, in each of those four ones of the cams 26 arranged annular which are located at regular intervals, a guide pipe 33 having an insertion hole 33a extends through the bearing hole 29 in place of the bolt 30. A tip portion of the guide pipe 33 projects upwards from the cam 26, and a base portion of the same projects downwards from the main body 21.

The guide pipe 33 has a screw portion 34 formed on the base portion, and secured to the main body 21 by means of the nut 32 from the outside. Thus, the cam 26 is rotatably supported by the guide pipe 33.

The cam 26 has a peripheral portion provided with two notches 35 located diametrically symmetrically so as to correspond to intersections 24a of the carrier guide grooves 24. A carrier 36 has a shaft 37 engaged with each notch 35.

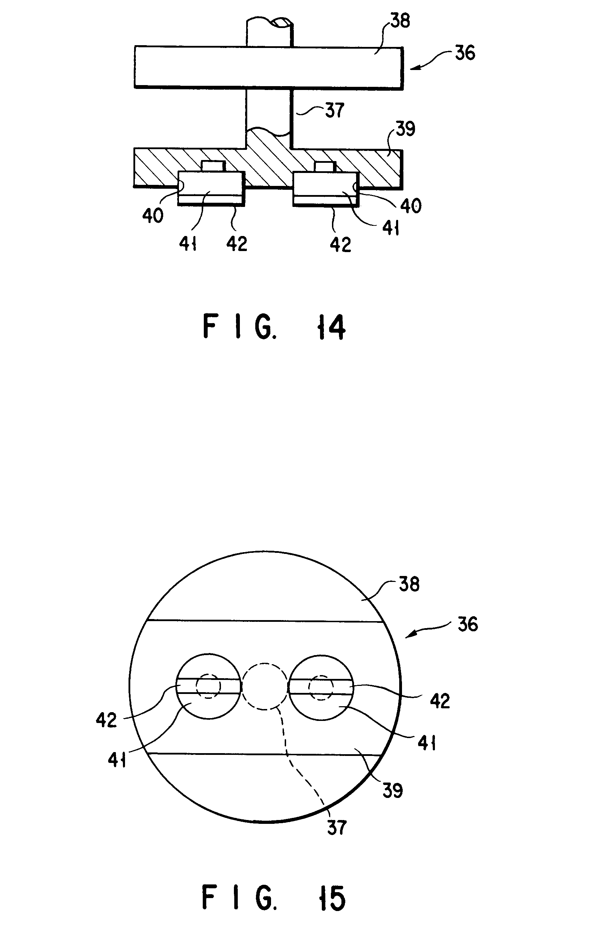

As is shown in Figs. 14 and 15, a flange 38 is provided on an upper portion of the shaft 37 of the carrier 36, while an end plate 39 is formed integral with a lower portion of the carrier 36. Circular depressions 40 are formed horizontally symmetrically in the lower surface of the end plate 39, and circular leg plates 41 are rotatably fitted in the depressions 40.

An engagement projection 42 is provided on the lower surface of each leg plate 41, and is engaged with a corresponding carrier guide groove 24. Thus, the leg plate 41 can rotate along the curved carrier guide groove 24.

A braiding reel shaft 43 serving as a thread-forwarding unit is formed integral with the flange 38 of the carrier 36 and coaxial with the shaft 37. The braiding reel shaft 43 has the braiding thread 13a wound thereon, and can forward the thread 13a. The metallic wire 15 wound on a reel 44 is inserted through the hole 33a of the guide pipe 33.

The tube layer 12 as a material of the hose main body is inserted through the holes 23 of the main body 21 and table plate 22, and is moved in a direction indicated by the arrow shown in Fig. 11 in accordance with braiding.

In the braider constructed as above, the braiding threads 13a are forwarded from the braiding reel shafts 43, and the metallic wires 15 are forwarded from the reels 44 through the guide pipes 33, thereby fixing tip portions of them on the periphery of a tip portion of the tube layer 12.

When the braider is driven in this state, the cams 26 adjacent to one another are rotated by rotation of the gear portions 27 thereof in directions opposite to one another, since the gear portions 27 are engaged with one another. In accordance with rotation of the cams 26, the carriers 36 engaged with the notches 35 of the cams 26 intersect with one another as they move along the carrier guide grooves 24.

Accordingly, the threads 13a fed from the braiding reel shafts 43 of the carriers 36 are braided on the periphery of the tube layer 12, and the metallic wires 15 fed from the guide pipes 33 are linearly attached onto the tube layer 12 in the axial direction, thereby forming the braided layer 13.

Then, the braided layer 13 is covered with the cover layer 14 made of rubber or a synthetic resin, thus providing a three-layered structure consisting of the tube layer 12, braided layer 13 with the metallic wires 15, and cover layer 14. Thereafter, the resultant product is subjected to heating and curing, which completes the main body 11 of the braid-reinforced flexible hose.

## Claims

1. A braid-reinforced flexible hose characterized by comprising:
a flexible elongated tube layer (12);
a braid layer (13) formed by braiding threads (13a) on a periphery of the tube layer (12);
a flexible cover layer (14) covering the braid layer (13); and
at least one linear wire member (15) extending in a direction of an axis of the tube layer (12) between the tube layer (12) and braid layer (13).

2. The braid-reinforced flexible hose according to claim 1, characterized in that the braided threads (13a) are made of a synthetic resin or a metal.

3. The braid-reinforced flexible hose according to claim 1, characterized in that the wire member (15) is a plastically deformable metallic wire.

4. The braid-reinforced flexible hose according to claim 1, characterized in that the tube layer (12) has an inner diameter of 12.7 mm q).

5. The braid-reinforced flexible hose according to claim 1, characterized in that the wire member (15) has a diameter falling within a range of 0.8 - 1.0 mm 4).

6. A braid-reinforced flexible hose comprising:
a main body (11) of the hose having opposite ends and including:
a flexible elongated tube layer (12);
a braid layer (13) formed by braiding threads on a periphery of the tube layer (12);
a flexible cover layer (14) covering the braid layer (13); and
a plurality of wire members (15) extending in a direction of an axis of the tube layer (12) between the tube layer (12) and braid layer (13); and
a caulking metallic member (16) secured to the opposite ends of the main body (11) in a state where the main body (11) is curved, thereby fixing ends of the wire members such that they cannot move in a direction of an axis of the main body (11) so as to keep the curved main body (11) unchanged.

7. The braid-reinforced flexible hose according to claim 6, characterized in that the braided threads (13a) are made of a synthetic resin or a metal.

8. The braid-reinforced flexible hose according to claim 6, characterized in that the wire member (15) is a plastically deformable metallic wire.

9. The braid-reinforced flexible hose according to claim 6, characterized in that the tube layer (12) has an inner diameter of 12.7 mm q).

10. The braid-reinforced flexible hose according to claim 6, characterized in that the wire member (15) has a diameter falling within a range of 0.8 - 1.Omm φ.

11. An apparatus for manufacturing a braid-reinforced flexible hose, comprising:
a braider main body (21) having an insertion hole (23) for inserting a flexible elongated tube layer (12) such that the tube layer (12) can move in a direction of an axis thereof;
continuous guide grooves (24) formed in the braider main body, shaped like numeral 8, and surrounding the insertion hole (23);
a plurality of cams each rotatable about an axis surrounded by a corresponding one of the guide grooves (24), adjacent cams (26) being rotatable in directions opposite to each other;
a plurality of carriers disposed to intersect with one another as they move along the guide grooves (24);
thread-forwarding units mounted on the carriers (36), respectively, for forwarding threads and braiding them on a peripheral surface of the tube layer (12); and
at least one wire-member forwarding unit extending through an axial portion of one of the cams (26), for forwarding a wire member (15) and linearly attaching the wire member (15) onto the tube layer (12) in the direction of the axis of the wire member (15).

12. The apparatus according to claim 11, characterized in that each of the cams (26) has a gear portion (27) and each adjacent cam (26) to enable the cams (26) to which meshes with the gear portion (27) of rotate in directions opposite to each other.

13. The apparatus according to claim 11, characterized in that the wire-member (15) forwarding unit has a guide pipe (33) with an insertion hole (33a) for inserting the wire member therethrough, the guide pipe (33) supporting the cams (26) rotatable.
